# EUROPEAN PATENT SPECIFICATION

(11) **EP 0 539 869 B1**
(45) Date of publication and mention of the grant of the patent: **28.05.1997**
(21) Application number: 92118091.5
(22) Date of filing: 22.10.1992
(51) Int. Cl.: B60R 21/20

(54) **Steering wheel including air bag module**
Lenkrad mit einbegriffener Luftsackeinheit
Volant incorporant un module à coussin d'air

(30) Priority: 28.10.1991 JP 88300/91 U; 28.10.1991 JP 281216/91
(43) Date of publication of application: 05.05.1993
(73) Proprietor: TOYODA GOSEI CO., LTD., Nishikasugai-gun Aichi, 452 (JP)
(72) Inventor: Hongou, Suzuaki, c/o Toyoda Gosei Technical Center, Inazawa-shi, Aichi (JP); Goto, Shinichi, c/o Toyoda Gosei Technical Center, Inazawa-shi, Aichi (JP)
(74) Representative: Blumbach, Kramer & Partner

(56) References cited:
- EP-A- 0 488 618
- DE-A- 4 008 960
- DE-A- 4 111 883
- GB-A- 2 192 841
- GB-A- 2 216 477
- US-A- 4 974 873
- US-A- 5 039 125
- PATENT ABSTRACTS OF JAPAN, vol. 13, no. 25 (M-787)(3373) 20 January 1989; & JP-A-63 235 144 (HONDA MOTOR CO LTD) 30 September 1988

## Description

### BACKGROUND OF THE INVENTION

The present invention relates to a steering wheel for a motor vehicle, and more particularly relates to a steering wheel unit including an air bag module.

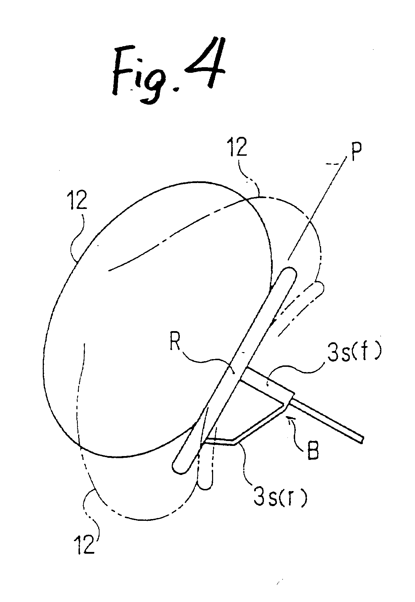

The air bag module of a conventional steering wheel unit including a steering wheel having four spokes is fastened to the spoke portions of the metal core of the wheel as described in the United States Patent No. 3,819,205. It is desirable that although the plane P on which the ring R of the steering wheel extends obliquely to a vertical plane as shown in FIG. 4, the top of the inflated air bag 12 of the module extends virtually vertically at the time of the action of the module so as to make the cushioning action of the bag good. It is also desirable that the inflated air bag 12 is controlled not to move forward while rotating about the axis of the boss B of the steering wheel but to move backward while rotating about the axis. For that reason, it is desired that the rigidity of the anterior ones 3s(f) of the spoke portion 3s of the metal core of the wheel, which support the ring R at the front portion thereof, and that of the posterior ones 3s(r) of the spoke portions, which support the ring at the rear portion thereof, are relatively high and low, respectively, to appropriately determine the rigidity of the ring which is to support the inflated air bag 12 along the nearly total circumference of the ring. The air bag module includes the air bag normally folded in the module, a cover made of a soft synthetic resin and covering the folded air bag, an inflator for supplying a prescribed gas into the bag to inflate it, and a box-shaped holder made of a metal plate and holding the bag, the cover and the inflator. The holder is so rigid that it is not deformed when the air bag is inflated. For that reason, since the air bag module is fastened to the anterior and posterior spoke portions of the metal core of the steering wheel, the rigidity of the portions is reinforced to make it difficult to plastically deform the portions, particularly the posterior ones whose rigidity is desired to be relatively low.

Further, the above-mention conventional steering wheel unit for a motor vehicle includes an air bag module fastened to the steering wheel of the unit as described in the United States Patent No. 3,819,205. The air bag module includes fastening portions extending down from the body of the module and having fastening holes virtually vertically penetrating the bodies of the portions. The spoke portions of the metal core of the steering wheel has fastening holes virtually vertically penetrating the bodies of the portions and corresponding to the fastening holes of the fastening portions of the module. The module is fastened to the wheel by bolts fitted in the fastening holes of both the module and the wheel.

Since the fastening holes of the fastening portions of the air bag module of the conventional steering wheel unit and those of the spoke portions of the metal core of the steering wheel thereof penetrate the bodies of these portions, respectively, it is difficult due to the interference of the module to fit the bolts in the holes to fasten the module to the wheel. For that reason, it has been desired that such fastening holes are provided to virtually horizontally penetrate the bodies of such portions. Since a strong force acts vertically in the axial direction of the ring of the steering wheel when the air bag module is put in action, it is desirable from a viewpoint of the strength of the unit to provide such fastening holes so that they virtually horizontally penetrate the bodies of such fastening portions.

It is no problem to such fastening portions to provide such fastening holes so that they virtually horizontally penetrate the bodies of the portions. However, if such a metal core is manufactured of an aluminum alloy, a magnesium alloy or the like through die-casting and the fastening holes are provided in the fastening portions of the core so as to virtually horizontally penetrate the bodies of the portions, it is necessary to use a slide core for the die-casting or drill the holes in the portions after the casting.

For the die-casting, dies are opened from and closed to each other in the axial direction of the ring of the metal core, which is virtually perpendicular to the direction of the penetration of the bodies of the fastening portions by the fastening holes. For that reason, if the metal core is manufactured through the die-casting and the fastening holes are provided in the fastening portions of the core so as to virtually horizontally penetrate the bodies of the portions, it is necessary to use the slide core for the casting or drill the holes in the portions after the casting. This way of manufacturing the metal core yes much time and trouble.

A steering wheel unit according to the preamble of the appended main claim is disclosed in US-A-4,974,873. This steering wheel unit includes a boss plate which is provided with a pair of projecting support walls, each support wall being provided with a threaded hole with a direction perpendicular to the axis of the steering wheel. The body of the module case of the air bag module is provided with a pair of legs. The distance between these legs being so that the legs are fitting outwardly to the support walls. For fixing the module case to the boss plate screw bolts are fitted through throughholes of the legs and are threadedly inserted into the support wall. As can be seen from the foregoing, the boss plate has to be provided with threaded holes through its support wall which means an additional step in using the boss plate and the steering wheel respectively.

### Summary of the invention

It is an object of the invention to provide a steering wheel unit including a steering wheel whose metal core can be easily manufactured although fastening openings for fastening the air bag module are provided in the core.

A solution of this object is achieved by a steering wheel unit according to appended claim 1.

The core of the inventive steering wheel unit can be manufactured in a simple manufacturing process without requiring an additional step for threaded holes fastening the air bag module. An upward movement of the air bag module is prevented by the coupling bolts. A downward movement of the air bag module is prevented by the contact of the peripheral surface of the bottom portion of the body of the module with the seat surface of the core.

Claim 2 is directed towards an advantageous embodiment of the inventive steering wheel unit wherein the core together with its fastening openings is simply manufactured by die-casting using only an upper and a lower die.

A further advantage of the steering wheel unit according to claim 3 is that the rigidity of any posterior spoke member is not reinforced because the module is fastened to the interior spoke portions only. In case of a crash therefore it is possible to plastically deform the steering wheel.

Appended claims 4 and 5 are directed towards further advantageous embodiments of the inventive steering wheel unit.

The air bag module of the steering wheel unit provided in accordance with the present device is fastened to the steering wheel of the unit by the bolts fitted in the fastening holes of the fastening portions of the module and the fastening openings of the metal core of the wheel. As a result, the possible contact of the bolts with the metal core at the tops of the fastening openings thereof prevents the upward movement of the air bag module, and the contact of the peripheral surface of the bottom portion of the body of the module with the seat surfaces of the core prevents the downward movement of the module although the bottoms of the fastening openings are not closed by the fastening parts of the core. For that reason, the firmness of the fastening of the module to the wheel is kept high enough. Besides, since the module is fastened to the wheel by the bolts fitted in the holes and the openings which virtually horizontally penetrate the bodies of the fastening portions of the module and those of the fastening parts of the metal core of the wheel, the module does not interfere with the work of the fastening, so that it is easy to perform the work. Since the bottoms of the fastening openings of the metal core are not closed by the fastening parts thereof, dies which are opened from the closed to each other vertically in the axial direction of the ring of the core can be used to manufacture the core through die-casting without the use of a slide core so as to smoothly form the fastening openings in the fastening parts of the metal core, thus making it needless to drill such openings therein after the casting. Therefore, the metal core having the fastening openings virtually horizontally penetrating the bodies of the fastening parts of the core in order to fasten the module to the wheel can be easily manufactured through the die-casting.

### BRIEF DESCRIPTION OF THE DRAWINGS

FIG. 1 is an exploded perspective view of a steering wheel unit which is an embodiment of the present invention and shows how the air bag module of the unit is fastened to the anterior spoke of the metal core of the steering wheel of the unit;
FIG. 2 is a plan view of the wheel;
FIG. 3 is a partial sectional view of the unit to show the state that the module is fastened to the wheel;
FIG. 4 is a schematic view to show the state that an air bag is inflated; and
FIG. 5 is a sectional view to illustrate how the metal core is cast.

### DETAILED DESCRIPTION OF THE PREFERRED EMBODIMENTS

An embodiment of the present invention is hereafter described with reference to the drawings attached hereto.

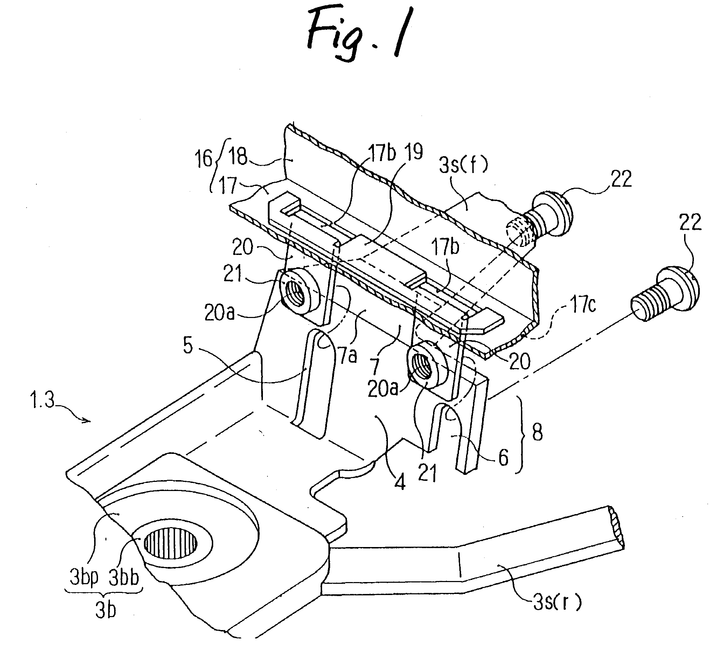

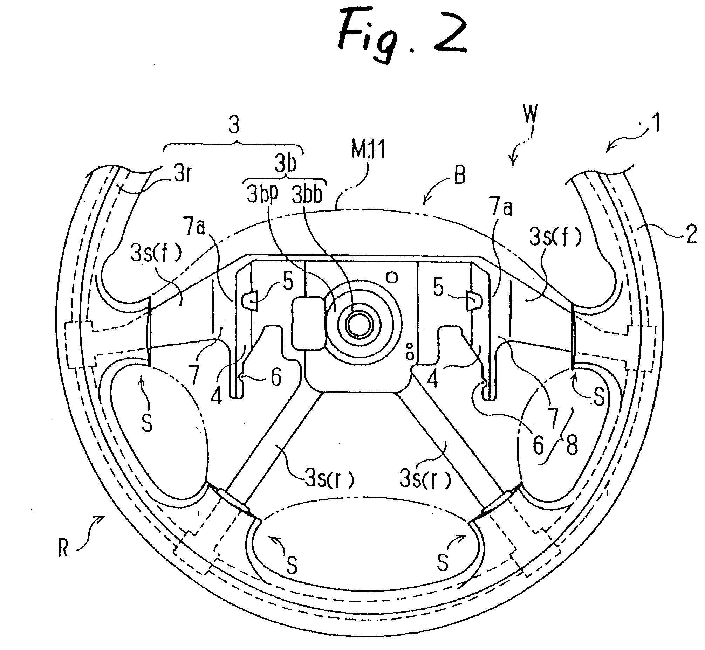

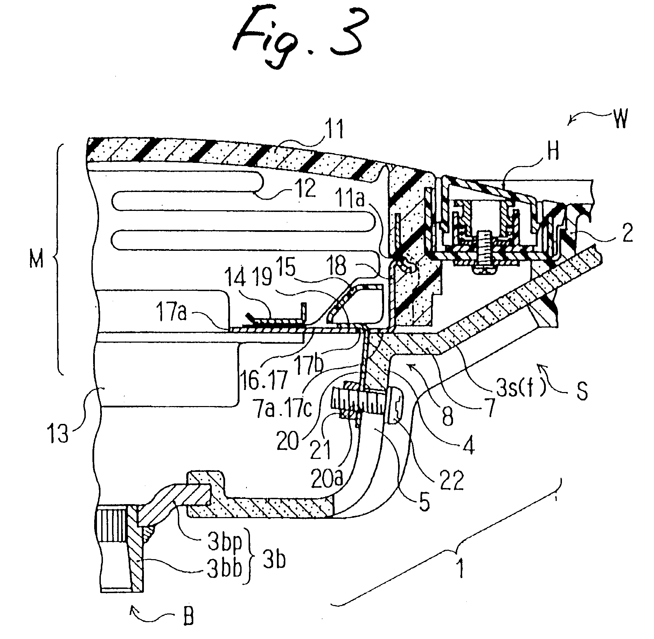

FIGS. 1, 2 and 3 show a steering wheel unit W which is the embodiment. The unit W includes a steering wheel 1, and an air bag module M. The steering wheel 1 includes a ring R, a boss B located at the center of the ring, and four spokes S linking the ring and the boss to each other. The air bag module M is fastened to the steering wheel 1, and located over the boss B of the wheel. Since the right and left halves of each of the wheel 1 and the module M are virtually symmetric to each other, the left half not shown in FIGS. 1 and 3 is not described so much as the right half herein.

The air bag module M includes a cover 11 made of a soft synthetic resin and constituting the top of the module, an air bag 12 folded in under the cover so as to be much inflated outward in a prescribed event while breaking the cover, an inflator 13 for supplying a prescribed gas into the bag to inflate it, and a box-shaped holder 16 made of a metal plate and holding the cover, the bag and the inflator. The module also includes a fastener 14 for fastening the air bag 12 to the holder 16 by pushing the bag on the inner surface of the lowermost portion thereof to the holder with bolts or the like. Shown at H in FIG. 3 is a horn switch mechanism.

The holder 16 includes a nearly oblong-shaped bottom portion 17 having a central through hole 17a in which the inflator 13 is fitted, and a wall 18 extending up from the four peripheral edges of the bottom portion and engaged in the fitting hole 11a of the cover 11. The bottom portion 17 has two through holes 17b near each of the right and left ends of the portion. Brackets 19 are welded to the bottom portion 17 and located on the edges of the through holes 17b. Each of the brackets 19 has fastening portions 20 extending down through the holes 17b and having fastening holes 20a virtually horizontally penetrating the lower parts of the portions. Nuts 21 are welded to the inner surfaces of the lower parts around the fastening holes 20a. Shown at 15 in FIG. 3 is a base 15 made of a synthetic resin and secured to the bottom portion 17 of the holder 16 so that the base closes the folded air bag 12 at the periphery thereof.

The steering wheel 1 has a metal core 3 provided in the ring R, the boss B and the spokes S, a coating layer 2 made of a soft synthetic resin, and a lower cover covering the bottom of the boss but not shown in the drawings. The metal core 3 has a ring portion 3r made of a steel bar and included in the ring R, a boss portion 3b included in the boss B, and spoke portions 3s made of a die-cast aluminum alloy or the like and linking the ring portion and the boss portion to each other. The boss portion 3b includes a hub 3bb made of steel and coupled to a steering shaft not shown in the drawings, and a flange 3bp made of a steel plate and welded to the hub. The coating layer 2 coats the ring portion 3r of the metal core 3, and parts of the spoke portions 3s thereof.

The right and left anterior ones 3s(f) of the spoke portions 3s of the metal core 3, which are included in the right and the left anterior spokes S and extend rightward and leftward from the boss B, have vertical parts 4 extending nearly vertically upward from the height of the top of the boss, and horizontal parts 7 extending virtually horizontally outward from the tops of the former parts. The vertical and the horizontal parts 4 and 7 constitute fastening parts 8 to which the air bag module M is fastened.

Each of the vertical parts 4 is formed with fastening openings 5 and 6 virtually horizontally penetrating the body of the part and corresponding to the fastening holes 20a of the fastening portions 20 of the air bag module M. The bottom of the opening 5 is not closed by the vertical part 4, but located in a horizontal part extending from the bottom of the vertical part to the flange 3bp of the boss portion 3b. The bottom of the other opening 6 is not closed by the vertical part 4 which does not extend to the horizontal part under the opening. The tops of the fastening openings 5 and 6 are located so that the peripheral surface 17c of the bottom portion 17 of the holder 16, which surrounds the fastening portions 20, is in contact with the seat surface 7a of the horizontal part 7 of the metal core 3 when bolts 22 are fitted in the fastening holes 20a of the fastening portions and the fastening openings 5 and 6 of the core and engaged with the nuts 21 to fasten the air bag module M to the boss B.

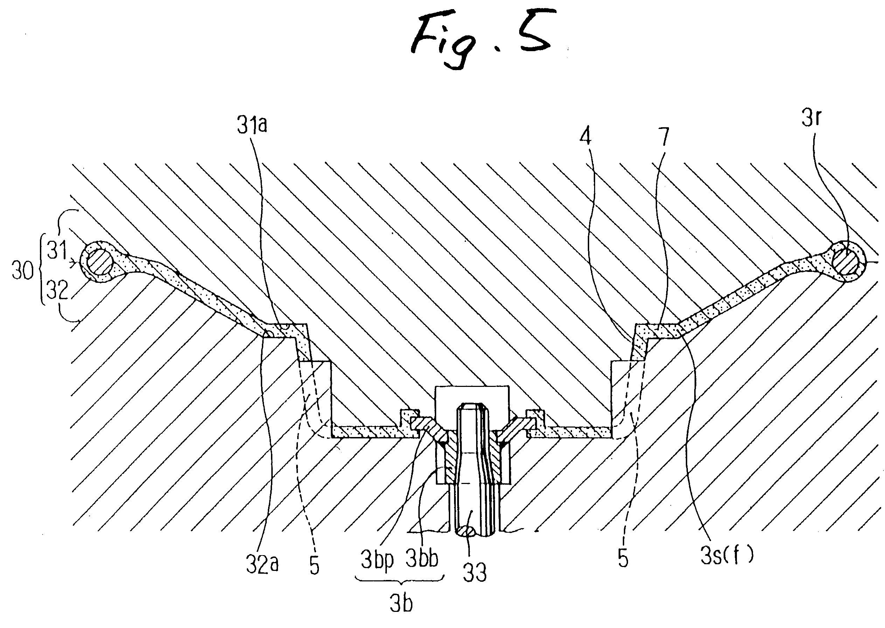

The manufacturing and assembly of the steering wheel unit W are described in detail from now on. The spoke portions 3s of the metal core 3 are cast in a casting die unit 30 including two dies 31 and 32 which are opened from and closed to each other vertically in the axial direction of the ring portion 3r of the core, as shown in FIG. 5. The cavity surfaces 31a of the die 31 function to form the tops of the spoke portions 3s of the core 3, while those 32a of the other die 32 function to form the bottoms of the spoke portions. Shown at 33 in FIG. 5 is a pin for setting the boss portion 3b composed of the hub 3bb and the flange 3bp welded thereto. To manufacture the metal core 3 through the casting in the die unit 30, the boss portion 3b and the ring portion 3r thereof are set in between the dies 31 and 32 opened from each other, the dies are then closed to each other, and the casting is thereafter performed. Since the fastening openings 5 and 6 provided in the vertical part 4 of each anterior spoke portion 3s(f) of the core 3 are not closed at the bottoms of the openings by the vertical part, the openings, which extend virtually horizontally through the body of the vertical part, can be formed by the cavity surfaces 32a of the die 32 at the time of the casting. For that reason, the core 3 can be cast through the use of the two dies 31 and 32 without the use of a slide core, and does not need to be formed with such openings by drilling or the like after the casting.

After the casting, the core 3 is set in a prescribed molding die unit to form the coating layer 2 on the core. The lower cover not shown in the drawings is then fastened to the layer 2. The steering wheel 1 is thus manufactured. After that, the air bag module M assembled in advance is fastened to the wheel 1. At that time, the fastening holes 20a of the fastening portions 20 of the module M are made coincident with the fastening openings 5 and 6 of the right and left anterior spoke portions 3s(f) of the metal core 3, the peripheral surface 17c of the bottom portion 17 of the holder 16 is put in contact with the seat surfaces 7a of the horizontal parts 7 of the anterior spoke portions, and the bolts 22 are inserted from outside into the holes and the openings and engaged in the nuts 21. The steering wheel unit W is thus manufactured.

When the air bag 12 is inflated by the gas from the inflator 13, the possible contact of the bolts 22 with the vertical parts 4 of the anterior spoke portions 3s(f) of the metal core 3 at the tops of the fastening openings 5 and 6 prevents the upward movement of the air bag module M, and the contact of the peripheral surface 17c of the bottom portion 17 of the holder 16 with the seat surfaces 7a of the horizontal parts 7 of the anterior spoke portions prevents the downward movement of the module although the bottoms of the openings are not closed by the vertical parts. For that reason, the module M is firmly held even at the time of the inflation of the bag 12.

Since the fastening openings 5 and 6 provided in the vertical part 4 of each anterior spoke portion 3s(f) of the core 3 are not closed at the bottoms of the openings by the vertical part, the openings, which virtually horizontally penetrate the body of the part, can be smoothly formed when the spoke portion is cast through the use of the vertically openable and closable die unit 3 without the use of the slide core. Therefore, the metal core 3 does not need to be formed with such openings by drilling or the like after the casting. The metal core having the fastening openings 5 and 6 for fastening the air bag module M to the steering wheel 1 can thus be easily manufactured through the die-casting.

Since the air bag module M is fastened to the fastening parts 8 constituted by the anterior ones 3s(f) of the spoke portions 3s of the metal core 3 so as to be supported by the anterior spoke portions but not to be directly supported by the posterior ones 3s(r) of the spoke portions 3s, the rigidity of the module does not affect that of the posterior spoke portions to reinforce it.

Although the steering wheel 1 has the four spokes, the present invention may be otherwise embodied so that the wheel has three spokes which are two anterior spokes and one posterior spoke. Although the spoke portions 3s of the metal core 3 of the wheel 1 are made of the aluminum alloy or the like by die-casting, they may be otherwise made of steel or the like. Although the fastening part 8 of each anterior spoke portions 3s(f) has the two fastening openings 5 and 6, the part may have only one fastening opening instead of the two. Although the bolts 22 are used to fasten the air bag module M to the steering wheel 1, rivets or the like may be used instead of the bolts to fasten the module to the wheel.

Shown in the drawings are the steering wheel 1, the spoke portion 3s of the metal core, the anterior spoke portion 3s(f) of the core, the posterior spoke portion 3s(r) of the core, a fastening part 8, a fastening portion 20, a fastening hole 20a, a bolt 22, the steering wheel unit W, a boss B, a spoke S, and the air bag module M.

Although the bracket 19 secured to the holder 16 has the fastening portions 20 having the fastening holes 20 for fastening the air bag module M to the steering wheel 1, other fastening portions having fastening holes may be provided in an insert on the peripheral portion of the cover 11 or in the wall 18 of the holder 16, instead of the former fastening portions, so as to extend down from the main portion of the insert or the wall. Although the spoke portions 3s of the metal core 3 are die-cast, the boss portion 3b and ring portion 3r thereof may be die-cast as well as the spoke portions.

The foregoing description of preferred embodiments of the invention has been presented for purposes of illustration and description. It is not intended to be exhaustive or to limit the invention to the precise form disclosed, and modifications and variations are possible in light of the above teachings or may be acquired from practice of the invention. The embodiments were chosen and described in order to explain the principles of the invention and its practical application to enable one skilled in the art to utilize the invention in various embodiments and with various modifications as are suited to the particular use contemplated. It is intended that the scope of the invention be defined by the claims appended hereto.

## Claims

1. A steering wheel unit comprising:
an airbag modul (M) including fastening portions (20) extending down from the body of said modul, said fastening portions (20) having fastening holes (20a) virtually horizontally penetrating the bodies of said fastening portions;
a steering wheel (1) having a core (3), said core having fastening openings (5, 6) corresponding to said fastening portions (20);
wherein said modul is fastened to said wheel (1) by coupling bolts (22), fitted through that fastening openings into said fastening holes,
**characterized in** that
said core (3) has seat surfaces (7a) over said openings so that a peripheral surface (17c) of the bottom portion (17) of the body of said modul (M) which is located outside said fastening portion (20), is in contact with said seat surfaces and
said fastening openings (5, 6) are virtually horizontally penetrating parts (4) of the body of said core (3) extending in a vertical direction, with the bottoms of said fastening openings being not closed by said vertical extending parts,
wherein the wordings specifying the geometrical relations are referring to a position of the steering wheel with its rotational axis being vertical and said airbag modul being above said parts of the core extending in a vertical direction.

2. A steering wheel unit according to claim 1, characterized in that the core is made by die-casting and said fastening openings (5, 6) are formed in such a manner that one of upper and lower dies (31, 32) is inserted into said opening (5) when said wheel is die-cast with said upper and lower dies.

3. A steering wheel unit according to claims 1 or 2, **characterized in** that said steering wheel (1) comprises
a boss portion (B),
a ring portion (R) surrounding said boss portion,
at least three spoke members (S) for connecting said boss and said ring portion, said spoke members including right and left anterior spoke members (3s(f)) which are disposed anterior to the other spoke member(s), each said spoke members having a metal core formed by said die-cast metal core (3), each said metal core of said right and left anterior spoke members being integrally formed with said fastening opening (5, 6), and said airbag modul (M) being disposed over said boss portion (B).

4. A steering wheel unit according to any of claims 1 to 3, **characterized in** that said airbag modul (M) includes a bag holder (16) made of a rigid material for holding an airbag (12), said bag holder comprising said bottom portion (17), right and left brackets (19) welded to said bottom portion, each of said brackets having said fastening portion (20).

5. A steering wheel unit according to claims 3 and 4, **characterized in** that said metal cores (3) of said anterior spoke members (3s(f)) are formed with said seat surfaces (7a) for bringing into contact with said bottom portion (17) of said bag holder (16).

## Patentansprüche

1. Lenkradeinheit, enthaltend:
einen Luftsackmodul (M) mit Befestigungsbereichen (20), die sich von dem Körper des Moduls abwärts erstrecken und Befestigungslöcher (20a) aufweisen, die die Körper der Befestigungsbereiche praktisch waagrecht durchdringen;
ein Lenkrad (1) mit einem Kern (3), der Befestigungsöffnungen (5, 6) aufweist, die den Befestigungsbereichen (20) entsprechen;
wobei der Modul an dem Rad (1) mittels Kuppelbolzen (22) befestigt ist, die durch die Befestigungsöffnungen hindurch in die Befestigungslöcher eingesetzt sind,
dadurch gekennzeichnet, daß
der Kern (3) Sitzflächen (7a) über den Öffnungen derart aufweist, daß eine Umfangsfläche (17c) des Bodenbereichs (17) des Körpers des Moduls (M), die außerhalb des Befestigungsbereiches angeordnet ist, in Berührung mit den Sitzflächen ist, und
die Befestigungsöffnungen (5, 6) sich in senkrechter Richtung erstreckende Teile (4) des Körpers des Kerns (3) praktisch waagrecht durchdringen, wobei die unteren Bereiche der Befestigungsöffnungen nicht von den sich senkrecht erstreckenden Teilen verschlossen sind,
wobei die Angaben, die die geometrischen Beziehungen spezifizieren, sich auf eine Position des Lenkrades beziehen, in der dessen Drehachse senkrecht ist und sich der Luftsackmodul über den Teilen des Kerns befindet, die sich in senkrechter Richtung erstrecken.

2. Lenkrad nach Anspruch 1, dadurch gekennzeichnet, daß der Kern durch Druckgießen hergestellt ist und die Befestigungsöffnungen (5, 6) derart ausgebildet sind, daß das obere oder untere Druckgußformwerkzeug (31, 32) in die Öffnungen (5) eingesetzt ist, wenn das Rad mittels des oberen und unteren Druckgußwerkzeugs druckgegossen wird.

3. Lenkradeinheit nach Anspruch 1 oder 2, dadurch gekennzeichnet, daß das Lenkrad (1) enthält
einen Nabenbereich (B),
einen Ringbereich (R), der den Nabenbereich umgibt,
wenigstens drei Speichenbauteile (S) zum Verinden des Nabenbereiches mit dem Ringbereich, welche Speichenbauteile rechte und linke vordere Speichenbauteile (3s(f)) enthalten, die vor dem (den) anderen Speichenbauteil(en) angeordnet sind, wobei jedes Speichenbauteil einen Metallkern aufweist, der durch den druckgegossenen Metallkern (3) gebildet ist, jeder Metallkern der rechten und linken vorderen Speichenbauteile einteilig mit der Befestigungsöffnung (5, 6) ausgebildet ist, und der Luftsackmodul (M) über dem Nabenbereich (B) angeordnet ist.

4. Lenkradeinheit nach einem der Ansprüche 1 bis 3, dadurch gekennzeichnet, daß der Luftsackmodul (M) einen aus einem starren Material hergestellten Sackhalter (16) zum Halten eines Luftsacks (12) aufweist, welcher Sackhalter den Bodenbereich (17), rechte und linke, mit dem Bodenbereich verschweißte Tragarme (19) aufweist, wobei jeder der Tragarme den Befestigungsbereich (20) aufweist.

5. Lenkradeinheit nach Anspruch 3 und 4, dadurch gekennzeichnet, daß die Metallkerne (3) der vorderen Speichenbauteile (3s(f)) mit den Sitzflächen (7a) zum Inberührungbringen mit dem Bodenbereich (17) des Sackhalters (16) ausgebildet sind.

## Revendications

1. Ensemble de volant de direction comprenant :
un module à coussin d'air (M) incorporant des parties de fixation (20) s'étendant vers le bas depuis le corps dudit module, lesdites parties de fixation (20) comportant des trous de fixation (20a) pénétrant les corps desdites parties de fixation;pratiquement dans la direction horizontale.
un volant de direction (1) comportant un noyau (3), ledit noyau possédant des ouvertures de fixation (5,6) correspondant auxdites parties de fixation (20);
dans lequel ledit module est fixé sur ledit volant(1) au moyen de boulons d'accouplement (22) introduits par l'intermédiaire de ces ouvertures de fixation dans lesdits trous de fixation,
**caractérisé** en ce que
ledit noyau (3) comporte des surfaces d'appui (7a) au dessus desdites ouvertures de telle façon que la surface périphérique (17c) de la partie inférieure 17 du corps dudit module (M) qui est situé à l'extérieur de ladite partie de fixation (20), est en contact avec lesdites surfaces d'appui et
lesdites ouvertures de fixation (5,6) pénètrent les parties 4 du corps dudit noyau (3) s'étendant dans une direction verticale, pratiquement dans la direction horizontale les parties inférieures desdites ouvertures de fixation n'étant pas fermées par lesdites parties s'étendant verticalement,
dans lequel des termes précisant les relations géométriques font référence à une position du volant de direction, son axe s'étendant dans la direction verticale et ledit module à coussin d'air se trouvant au dessus desdites zones du noyau s'étendant suivant une direction verticale.

2. Ensemble de volant de direction selon la revendication 1, caractérisé en ce que le noyau est réalisé par moulage sous pression et en ce que lesdites ouvertures de fixation (5,6) sont formées d'une manière telle que soit le moule supérieur (31) ou soit le moule inférieur (32) est introduit dans ladite ouverture (5) lorsque ledit volant est moulé sous pression grâce auxdits moules supérieur et inférieur.

3. Ensemble de volant de direction selon la revendication 1 ou 2, **caractérisé** en ce que ledit volant de direction (1) comprend
une partie formant moyeu (B),
une partie formant anneau(R) entourant la dite partie formant moyeu,
au moins trois éléments rayon (S) destinés à relier ledit moyeu et ladite partie formant anneau, lesdits éléments rayon comprenant des éléments avants à droite et à gauche (3s(f))lesquels sont disposés en avant des autres éléments rayon (s), chacun desdits éléments rayon comportant un noyau métallique formé par ledit noyau métallique moulé sous pression (3), chacun desdits noyaux métalliques desdits éléments rayon avant à droite et à gauche étant formé d'un seul tenant avec ladite ouverture de fixation (5,6), et ledit module à coussin d'air (M) étant installé au dessus de ladite partie formant moyeu (B).

4. Ensemble de volant de direction selon l'une quelconque des revendications 1 à 3, **caractérisé** en ce que ledit module à coussin d'air (M) incorpore un support de coussin (16) réalisé en matériau rigide pour supporter un coussin d air (12), ledit support de coussin comprenant ladite partie inférieure (17), les pattes droites et gauches (19) soudées à ladite partie inférieure, chacune desdites pattes comportant ladite partie de fixation (20).

5. Ensemble de volant de direction selon les revendications 3 et 4, **caractérisé** en ce que lesdits noyaux métalliques desdits éléments rayons avants (3s(f)) sont formés avec lesdites surfaces d'appui (7a) destinées à venir en contact avec ladite partie inférieure (17) dudit support de coussin (16).
